# EUROPÄISCHE PATENTSCHRIFT

(11) **EP 3 611 431 B1**
(45) Veröffentlichungstag und Bekanntmachung des Hinweises auf die Patenterteilung: **29.11.2023**
(21) Anmeldenummer: 19190686.6
(22) Anmeldetag: 08.08.2019
(51) Int. Cl.: F23D 3/40, F23L 7/00, F23C 99/00, F23D 14/78, F23J 15/02, B60H 1/22, B01D 53/86, B01D 53/56, B01D 53/34, B01D 53/94, F23J 15/06, F23J 15/00

(54) **BRENNKAMMERBAUGRUPPE FÜR EIN FAHRZEUGHEIZGERÄT**
COMBUSTION CHAMBER MODULE FOR A VEHICLE HEATER
MODULE DE CHAMBRE DE COMBUSTION POUR UN DISPOSITIF DE CHAUFFAGE DE VÉHICULE

(30) Priorität: 14.08.2018 DE 102018119701; 31.10.2018 DE 102018127168
(43) Veröffentlichungstag der Anmeldung: 19.02.2020
(73) Patentinhaber: Eberspächer Climate Control Systems GmbH, 73730 Esslingen (DE)
(72) Erfinder: HUMBURG, Michael, 73035 Göppingen (DE); PFISTER, Wolfgang, 73732 Esslingen (DE); BLASCHKE, Walter, 73779 Deizisau (DE)
(74) Vertreter: Ruttensperger Lachnit Trossin Gomoll

(56) Entgegenhaltungen:
- DE-A1-102016 015 762
- DE-A1-102017 100 430
- US-A- 4 718 602

## Beschreibung

Die vorliegende Erfindung betrifft eine Brennkammerbaugruppe für ein brennstoffbetriebenes Fahrzeugheizgerät.

Derartige mit Brennstoff, wie zum Beispiel Diesel oder Benzin, also flüssigem Brennstoff beispielsweise als Standheizung oder Zuheizer betriebene Fahrzeugheizgeräte werden dazu genutzt, die in einen Fahrzeuginnenraum einzuleitende Luft oder das in einem Kühlmittelkreislauf einer Brennkraftmaschine zirkulierende flüssige Kühlmittel zu erwärmen. Da für derartige Fahrzeugheizgeräte im Allgemeinen nur wenig Bauraum zur Verfügung steht, müssen diese kompakt aufgebaut und gleichwohl dazu in der Lage sein, die erforderliche Heizleistung zur Verfügung stellen zu können. Um dies bei ausreichend hohem Wirkungsgrad zu erreichen, werden derartige Fahrzeugheizgeräte mit sehr hohen Verbrennungstemperaturen betrieben, was einerseits zwar die Bereitstellung einer großen Wärmeenergiemenge gewährleistet, andererseits jedoch zu einem hohen Stickoxidausstoß führt.

Eine Brennkammerbaugruppe ist aus der US 4718602 A bekannt. Bei dieser bekannten Brennkammerbaugruppe wird der von einer Einspritzdüse abgegebene Brennstoff durch eine zentrale Öffnung in einer eine Brennkammer begrenzenden Bodenwandung hindurch in die Brennkammer eingespritzt. Über eine Mehrzahl von in der Bodenwandung vorgesehenen, die zentrale Öffnung umgebenden, schlitzartigen Öffnungen, über welche ein stromaufwärts der Brennkammer angeordnetes Verbrennungsluftzuführvolumen zur Brennkammer offen ist, tritt die Verbrennungsluft in die Brennkammer ein und mischt sich dort mit dem in die Brennkammer in Form eines Sprühnebels eingespritzten Brennstoff. Die DE 10 2016 015 762 A1 und die DE 10 2017 100 430 A1 offenbaren jeweils eine

Brennkammerbaugruppe gemäß dem Oberbegriff des Anspruchs 1, bei welcher der in flüssiger Form zugeführte Brennstoff in ein an einer Bodenwandung einer Brennkammerbaugruppe vorgesehenes poröses Verdampfermedium eingeleitet und über dieses in Richtung Brennkammer abgedampft wird.

Es ist die Aufgabe der vorliegenden Erfindung, eine Brennkammerbaugruppe für ein brennstoffbetriebenes Fahrzeugheizgerät vorzusehen, welches bei kompakter Bauart eine hohe Heizleistung bei verringertem Stickoxidausstoß erreicht. Erfindungsgemäß wird diese Aufgabe gelöst durch eine Brennkammerbaugruppe für ein brennstoffbetriebenes Fahrzeugheizgerät gemäß Anspruch 1. Diese Brennkammerbaugruppe umfasst ein in Richtung einer Gehäuselängsachse langgestrecktes Brennkammergehäuse mit einer eine Brennkammer nach radial außen begrenzenden Brennkammerumfangswand und einem die Brennkammer axial begrenzenden Brennkammerboden sowie ein über eine Mehrzahl von Durchtrittsöffnungen zu der Brennkammer offenes Verbrennungsluftzuführvolumen, ferner umfassend eine Kühlmediumzuführanordnung zum Zuführen von flüssigem Kühlmedium zu dem Verbrennungsluftzuführvolumen zum Einleiten des flüssigen Kühlmediums in die zur Brennkammer geleitete Verbrennungsluft.

Durch die Einleitung eines flüssigen Kühlmediums, zum Beispiel Wasser, in die zur Brennkammer geleitete Verbrennungsluft wird aufgrund der durch das flüssige Kühlmedium bereitgestellten hohen Verdampfungsenthalpie eine Senkung der Verbrennungstemperatur im Bereich der Brennkammer bzw. eines daran anschließenden und beispielsweise in einem Flammenrohr gebildeten Volumenbereichs erreicht. Die Senkung der Verbrennungstemperatur führt zu einem verminderten Stickoxidanteil im Abgas, würde grundsätzlich aber den Wirkungsgrad des Fahrzeugheizgeräts senken, da das in einer Wärmetauscheranordnung in thermische Wechselwirkung mit einem zu erwärmenden Medium gebrachte Abgas eine entsprechend geringere Temperatur aufweist. Da bei der erfindungsgemäß aufgebauten Brennkammerbaugruppe das die Brennkammer bzw. ein Flammenrohr verlassende Abgas jedoch den Kühlmediumdampf transportiert und ein derartiger Heißdampf einen deutlich höheren Wärmeübertragungskoeffizienten als trockenes Rauchgas aufweist, kann das den Kühlmediumdampf transportierende Abgas in der Wärmetauscheranordnung wesentlich mehr Wärme auf ein zu erwärmendes Medium übertragen, wodurch die durch die Einleitung des flüssigen Kühlmediums herbeigeführte Senkung der Verbrennungstemperatur kompensiert wird.

Um eine Einleitung des flüssigen Kühlmediums nahe an der Brennkammer zu ermöglichen, wird vorgeschlagen, dass eine die Brennkammerumfangswand außen umgebende Außenumfangswand vorgesehen ist, wobei zwischen der Brennkammerumfangswand und der Außenumfangswand eine Verbrennungsluftzuführkammer des Verbrennungsluftzuführvolumens gebildet ist und die Verbrennungsluftzuführkammer über wenigstens einen Teil der Durchtrittsöffnungen zu der Brennkammer offen ist, und dass die Kühlmediumzuführanordnung wenigstens eine Kühlmediumzuführleitung zur Abgabe von flüssigem Kühlmedium in die Verbrennungsluftzuführkammer umfasst. Insbesondere kann dabei vorgesehen sein, dass die Kühlmediumzuführleitung in die Verbrennungsluftzuführkammer einmündet.

Die Kühlmediumzuführleitung kann wenigstens eine zu der Verbrennungsluftzuführkammer offene Kühlmediumabgabeöffnung aufweisen.

Für die Verteilung des einzuleitenden flüssigen Kühlmediums wird vorgeschlagen, dass an einem Ende eines in die Verbrennungsluftzuführkammer sich erstreckenden Leitungsabschnitts der Kühlmediumzuführleitung eine Kühlmediumabgabedüse mit wenigstens einer, vorzugsweise einer Mehrzahl von Kühlmediumabgabeöffnungen vorgesehen ist.

Dabei kann der Leitungsabschnitt sich im Wesentlichen in Richtung der Gehäuselängsachse erstrecken.

Bei einer alternativen Ausgestaltungsart kann für eine gleichmäßige Einleitung des Kühlmediums in die Brennkammer vorgesehen sein, dass die Verbrennungsluftzuführkammer die Brennkammer wenigstens bereichsweise radial außen umgibt, und dass die Kühlmediumzuführleitung einen in der Verbrennungsluftzuführkammer sich in Umfangsrichtung wenigstens bereichsweise um die Brennkammerumfangswand erstreckenden Leitungsabschnitt aufweist, wobei in dem Leitungsabschnitt wenigstens eine, vorzugsweise eine Mehrzahl von Kühlmediumabgabeöffnungen vorgesehen ist.

Die gleichmäßige Einleitung des Kühlmediums kann dadurch unterstützt werden, dass eine Mehrzahl von Kühlmediumabgabeöffnungen vorgesehen ist, und dass die Kühlmediumabgabeöffnungen entlang des Leitungsabschnitts in Umfangsrichtung aufeinanderfolgend angeordnet sind.

Wenigstens eine, vorzugsweise jede, Kühlmediumabgabeöffnung kann an einer dem Brennkammerboden axial zugewandten Seite des Leitungsabschnitts vorgesehen sein. Das aus der Kühlmediumzuführleitung abgegebene Kühlmedium wird dabei im Wesentlichen entgegen der Strömungsrichtung der diese Leitung umströmenden Verbrennungsluft in die Verbrennungsluft abgegeben, so dass bereits bei diesem Vorgang eine Verteilung des flüssigen Kühlmediums in der Verbrennungsluft erfolgt. Alternativ oder zusätzlich kann vorgesehen sein, dass wenigstens eine, vorzugsweise jede, Kühlmediumabgabeöffnung an einer vom dem Brennkammerboden axial abgewandten Seite des Leitungsabschnitts vorgesehen ist. Das aus derartig orientierten Kühlmediumabgabeöffnungen abgegebene Kühlmedium wird von der die Kühlmediumzuführleitung umströmenden Verbrennungsluft effizient mitgeführt und in Richtung zur Brennkammer geleitet. Zum Einspeisen des Kühlmediums kann die Kühlmediumzuführanordnung eine Kühlmediumpumpe zum Fördern des flüssigen Kühlmediums aus einem Kühlmediumreservoir zu dem Verbrennungsluftzuführvolumen umfassen.

Erfindungsgemäß umfasst bei der als sogenannter Verdampferbrenner ausgestalteten Brennkammerbaugruppe der Brennkammerboden ein poröses Verdampfermedium und eine flüssigen Brennstoff zu dem porösen Verdampfermedium leitende Brennstoffzuführleitung. Die Erfindung betrifft ferner ein Fahrzeugheizgerät, umfassend eine erfindungsgemäß aufgebaute Brennkammerbaugruppe.

Eine weitere Reduzierung des Stickoxidausstoßes kann bei einer vorteilhaften Weiterbildung dadurch erreicht werden, dass in einem Abgasströmungsvolumen eine von Abgas umströmbare Reduktionskatalysatoranordnung, beispielsweise SCR-Katalysatoranordnung, vorgesehen ist, und dass die Kühlmediumzuführanordnung zum Zuführen eines Reduktionsmittels als flüssiges Kühlmedium ausgebildet ist. Es wird somit nicht nur der Effekt einer durch die Verdampfung des Reduktionsmittels gesenkten Flammtemperatur genutzt, sondern auch die unter Verwendung dieses verdampften und im Abgasstrom transportierten Reduktionsmittels in der SCR-Katalysatoranordnung ablaufende selektive katalytische Reduktion genutzt, um eine substantielle Verringerung des Stickoxidanteils im Abgas herbeizuführen.

Um dabei den in einem Fahrzeugheizgerät zur Verfügung stehenden Bauraum zu nutzen, wird vorgeschlagen, dass zwischen der Brennkammerbaugruppe und einem Wärmetauschergehäuse ein wenigstens einen Teil des Abgasströmungsvolumens bereitstellender Abgasströmungsraum gebildet ist, und dass die Reduktionskatalysatoranordnung in dem Abgasströmungsraum angeordnet ist. Ferner kann zur Abgasbehandlung in dem Abgasströmungsvolumen eine Oxidationskatalysatoranordnung vorgesehen sein.

Für eine einfach zu gestaltende, kompakte Bauart wird dabei vorgeschlagen, dass die Reduktionskatalysatoranordnung in die Oxidationskatalysatoranordnung integriert ist. Dies kann beispielsweise dadurch erreicht werden, dass auf Oberflächenbereiche eines Substrats der Oxidationskatalysatoranordnung das Katalysatormaterial der Reduktionskatalysatoranordnung aufgebracht wird.

Die Erfindung wird nachfolgend mit Bezug auf die beiliegenden Figuren beschrieben. Es zeigt:
- Fig. 1: eine Längsschnittansicht einer Brennkammerbaugruppe für ein brennstoffbetriebenes Fahrzeugheizgerät;
- Fig. 2: eine Längsschnittansicht einer Kühlmediumabgabedüse;
- Fig. 3: die Kühlmediumabgabedüse der Fig. 2 in Blickrichtung III Fig. 2;
- Fig. 4: die Kühlmediumabgabedüse der Fig. 2 in Blickrichtung IV Fig. 2;
- Fig. 5: eine der Fig. 1 entsprechende Ansicht einer alternativen Ausgestaltungsart einer Brennkammerbaugruppe;
- Fig. 6: die Brennkammerbaugruppe der Fig. 5 in Blickrichtung VI in Fig. 5;
- Fig. 7: eine Kühlmediumzuführleitung der Brennkammerbaugruppe der Fig. 5;
- Fig. 8: die Kühlmediumzuführleitung der Fig. 7 in Blickrichtung VIII in Fig. 7;
- Fig. 9: ein Fahrzeugheizgerät mit einer Brennkammerbaugruppe wie in Fig. 1. dargestellt.

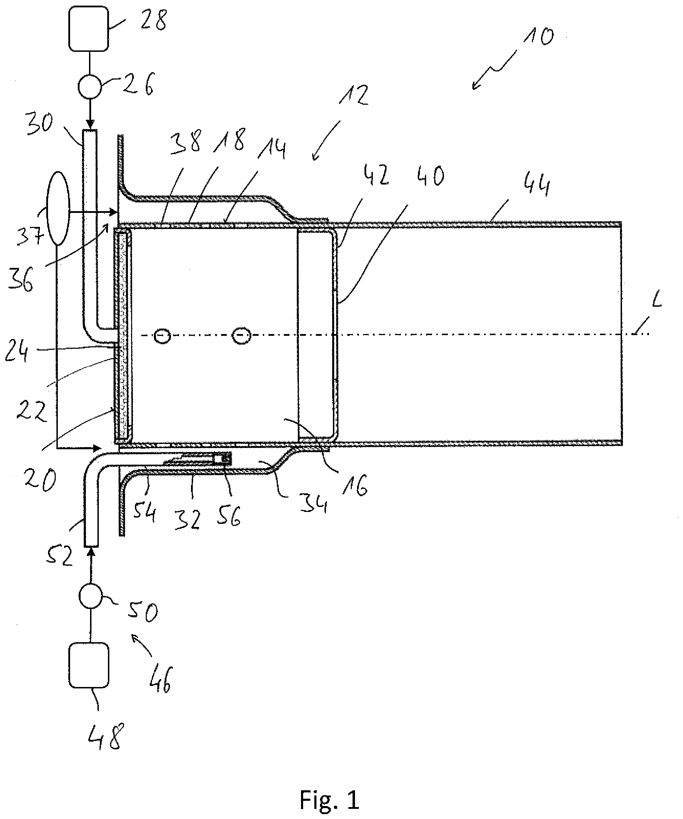

In Fig. 1 ist eine Brennkammerbaugruppe für ein brennstoffbetriebenes Fahrzeugheizgerät 10 allgemein mit 12 bezeichnet. Die Brennkammerbaugruppe 12 umfasst ein Brennkammergehäuse 14, das in Richtung einer Gehäuselängsachse L langgestreckt ist und eine eine Brennkammer 16 nach radial außen begrenzende Brennkammerumfangswand 18 aufweist. An der Brennkammerumfangswand 18 ist ein Brennkammerboden 20 festgelegt. Dieser begrenzt die Brennkammer 16 axial und umfasst an einer Trägeranordnung 22 ein poröses Verdampfermedium 24, wie z. B. ein Metallgeflecht, Schaumkeramik oder dergleichen.

Eine Brennstoffpumpe 26, beispielsweise Dosierpumpe, fördert flüssigen Brennstoff aus einem Brennstoffreservoir 28 über eine Brennstoffzuführleitung 30 in das poröse Verdampfermedium 24. Im porösen Verdampfermedium 24 wird der flüssig zugeführte Brennstoff durch Kapillarförderwirkung verteilt und an einer der Brennkammer 16 zugewandten Oberfläche als Brennstoffdampf in Richtung zur Brennkammer abgegeben.

Eine die Brennkammerumfangswand 18 radial außen, also an ihrer Außenseite umgebende Außenumfangswand 32 ist am Brennkammergehäuse 14 beispielsweise durch Verschweißung festgelegt und begrenzt zusammen mit der Brennkammerumfangswand 18 eine diese vorzugsweise in ihrem gesamten Umfangsbereich ringartig umgebende Verbrennungsluftzuführkammer 34 eines allgemein mit 36 bezeichneten Verbrennungsluftzuführvolumens. Ein Verbrennungsluftgebläse 37, beispielsweise Seitenkanalgebläse, fördert Verbrennungsluft in das Verbrennungsluftzuführvolumen 36 und damit in die die Brennkammerumfangswand 18 umgebende Verbrennungsluftzuführkammer 34. Im Bereich der Verbrennungsluftzuführkammer 34 sind in der Brennkammerumfangswand 18 mehrere Durchtrittsöffnungen 38 vorgesehen, durch welche hindurch die eine wesentliche Strömungsrichtungskomponente entlang der Gehäuselängsachse L aufweisende Verbrennungsluft nach radial innen in die Brennkammer 16 einströmen und sich dort mit dem Brennstoffdampf vermischen kann, um ein zündfähiges bzw. verbrennungsfähiges Gemisch bereitzustellen. Dieses kann durch ein in der Fig. 1 nicht dargestelltes Zündorgan gezündet werden, um auf diese Art und Weise die Verbrennung in der Brennkammerbaugruppe 12 zu starten. Das bei dieser Verbrennung in der Brennkammer entstehende und diese verlassende Abgas tritt durch eine Öffnung 40 in einer Flammblende 42 hindurch in ein Flammrohr 44 ein, welches an die Brennkammerumfangswand 18 anschließt, im dargestellten Ausgestaltungsbeispiel damit integral ausgebildet ist. Das das Flammrohr 44 verlassende Abgas kann in einer in Fig. 1 nicht dargestellten Wärmetauscheranordnung Wärme auf ein zu erwärmendes Medium, beispielsweise die in einen Fahrzeuginnenraum einzuleitende Luft oder das in einem Kühlmittelkreislauf einer Brennkraftmaschine eines Fahrzeugs zirkulierende flüssige Kühlmittel, übertragen, bevor es zur Umgebung hin ausgestoßen wird.

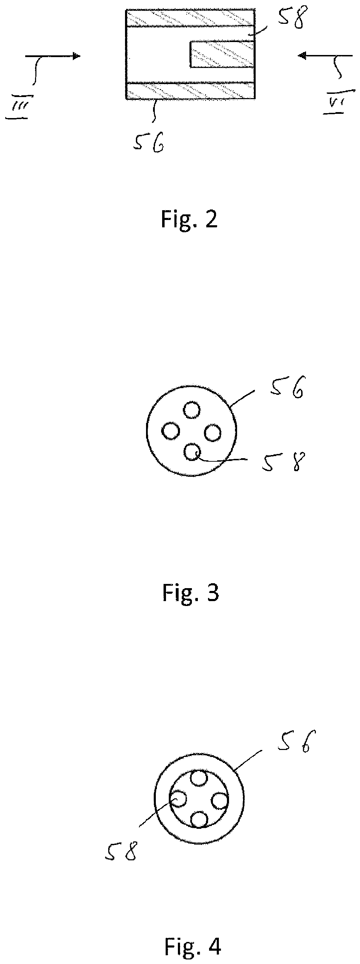

Bei der in Fig. 1 dargestellten Brennkammerbaugruppe 10 ist eine allgemein mit 46 bezeichnete Kühlmediumzuführanordnung vorgesehen, über welche ein flüssiges Kühlmedium, z. B. entmineralisiertes bzw. destilliertes Wasser, in das Verbrennungsluftzuführvolumen 36, insbesondere die Verbrennungsluftzuführkammer 34, eingespeist werden kann, sobald nach Beginn des Verbrennungsbetriebs die Verbrennung in der Brennkammer 16 sich stabilisiert hat. Die Kühlmediumzuführanordnung 46 umfasst eine das flüssige Kühlmedium aus einem Kühlmediumreservoir 48 fördernde Kühlmediumpumpe 50. Diese fördert das Kühlmedium in eine Kühlmediumzuführleitung 52. Ein sich näherungsweise in Richtung der Gehäuselängsachse L in die Verbrennungsluftzuführkammer 34 erstreckender Leitungsabschnitt 54 der Kühlmediumzuführleitung 52 weist an seinem Ende eine allgemein mit 56 bezeichnete Kühlmediumabgabedüse auf. Diese in den Fig. 2 bis 4 detaillierter dargestellte Kühlmediumabgabedüse 56 weist eine Mehrzahl von Kühlmediumabgabeöffnungen 58 auf, durch welche hindurch das in der Kühlmediumzuführleitung 52 strömende flüssige Kühlmittel abgegeben und somit in die in der Verbrennungsluftzuführkammer 34 strömende Verbrennungsluft eingeleitet wird.

Das zunächst in flüssiger Form in die Verbrennungsluft eingeleitete flüssige Kühlmittel wird zum Teil bereits vor dem Einströmen der Verbrennungsluft in die Brennkammer 16, also in der Verbrennungsluftzuführkammer 34, zum Teil nach Einleiten in die Brennkammer 16 verdampft. Da auch die Außenumfangswand 32 durch den in der Brennkammer 16 ablaufenden Verbrennungsprozess ebenfalls erwärmt wird, wird bereits vor Einleiten der Verbrennungsluft in die Brennkammer 16 die Verbrennungsluft vorgewärmt, so dass bereits im Bereich der Verbrennungsluftzuführkammer die Verdampfung des flüssigen Kühlmediums unterstützt wird. Die dafür erforderliche Energie wird dem in der Brennkammer 16 ablaufenden Verbrennungsprozess entzogen, so dass die Verbrennungstemperatur gesenkt wird und dementsprechend ein mit geringerer Temperatur die Brennkammer 16 bzw. das Flammrohr 44 verlassendes, jedoch den Kühlmediumdampf transportierendes Abgas in Richtung zur Wärmetauscheranordnung strömt.

Da der im Abgas transportierte Kühlmediumdampf einen wesentlich höheren Wärmeübertragungskoeffizienten aufweist, als trockenes, also keinen Kühlmediumdampf transportierendes Abgas, wird trotz der gesenkten Abgastemperatur in der stromabwärts folgenden Wärmetauscheranordnung eine wesentlich effizientere Übertragung von Wärme auf das zu erwärmende Medium erreicht. Somit wird bei durch die geringere Verbrennungstemperatur auch gesenktem Stickoxidanteil im Abgas aufgrund des hohen Wirkungsgrades die Bereitstellung hoher Heizleistungen ermöglicht.

Es sei darauf hingewiesen, dass selbstverständlich bei der in Fig. 1 dargestellten Ausgestaltung die Kühlmediumzuführleitung 52 insbesondere mit ihrem in die Verbrennungsluftzuführkammer 34 einmündenden Leitungsabschnitt 54 sich in anderer Richtung erstrecken kann. So kann diese beispielsweise eine Umfangsrichtungserstreckungskomponente aufweisen und mit der an ihrem Ende getragenen Kühlmediumabgabedüse 56 somit an geeigneter Positionierung enden. Auch in dem vor der Kühlmediumabgabedüse 56 liegenden Bereich kann der Leitungsabschnitt 54 eine oder mehrere Kühlmediumabgabeöffnungen aufweisen.

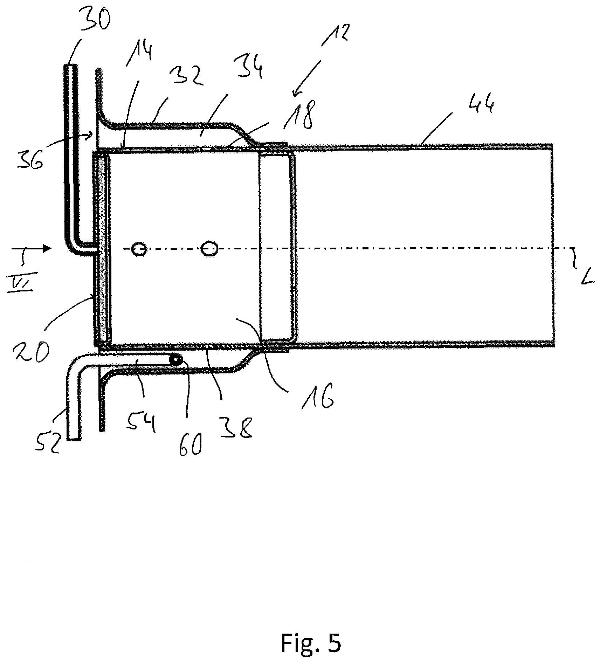

Eine alternative Ausgestaltungsart ist in den Fig. 5 bis 8 dargestellt. Diese entspricht hinsichtlich des grundsätzlichen Aufbaus der Brennkammerbaugruppe dem vorangehend beschriebenen Aufbau, so dass auf diese Ausführungen verwiesen werden kann.

Ein Unterschied besteht in der Ausgestaltung der Kühlmediumzuführleitung 52. Diese ist bei der in den Fig. 5 bis 8 dargestellten Ausgestaltungsform so ausgebildet, dass an den beispielsweise in Richtung der Gehäuselängsachse L sich erstreckenden Leitungsabschnitt 54 ein in der Verbrennungsluftzuführkammer 34 sich in Umfangsrichtung um die Brennkammerumfangswand 18 erstreckender Leitungsabschnitt 60 anschließt. In diesen Leitungsabschnitt 60 sind Kühlmediumabgabeöffnungen 62 in Umfangsrichtung um die Gehäuselängsachse L aufeinanderfolgend vorgesehen. Auf diese Art und Weise wird eine bessere Verteilung des in die Verbrennungsluft eingeleiteten flüssigen Kühlmediums über den Umfang der Verbrennungsluftzuführkammer erreicht und somit auch eine gleichmäßigere Einleitung des Kühlmediums in die Brennkammer gewährleistet.

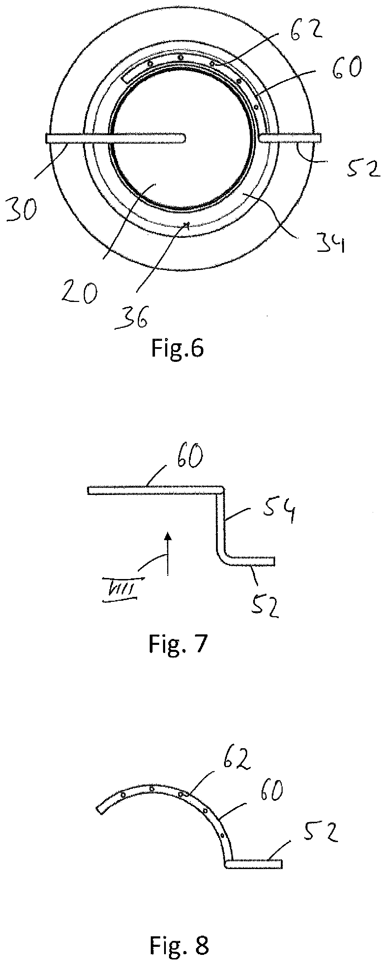

Man erkennt insbesondere in den Fig. 6 und 8, dass an dem Leitungsabschnitt 60 der Kühlmediumzuführleitung 52 die oder ein Teil der Kühlmediumabgabeöffnungen 62 an der axial dem Brennkammerboden 22 zugewandten Seite des Leitungsabschnitts 60 vorgesehen sind. Dies bedeutet, dass aus diesen Kühlmediumabgabeöffnungen 62 Kühlmedium in einer Richtung abgegeben wird, welche der Strömungsrichtung der Verbrennungsluft in der Verbrennungsluftzuführkammer 34 im Wesentlichen entgegengerichtet ist. Auf diese Art und Weise wird bereits beim Ausstoßen des Kühlmediums aus dem Leitungsabschnitt 60 eine effiziente Durchmischung mit der den Leitungsabschnitt 60 umströmenden Verbrennungsluft gewährleistet. Alternativ oder zusätzlich können auch an der vom Brennkammerboden 20 abgewandten Seite des Leitungsabschnitts 62 derartige Kühlmediumabgabeöffnungen vorgesehen sein.

Es ist darauf hinzuweisen, dass selbstverständlich der Leitungsabschnitt 60 sich auch über einen größeren Umfangsbereich der Verbrennungsluftzuführkammer 34 erstrecken kann. Auch kann der Leitungsabschnitt 60 eine Erstreckungsrichtungskomponente in Richtung der Gehäuselängsachse aufweisen, so dass der Leitungsabschnitt 60 schraubenartig gewunden ist.

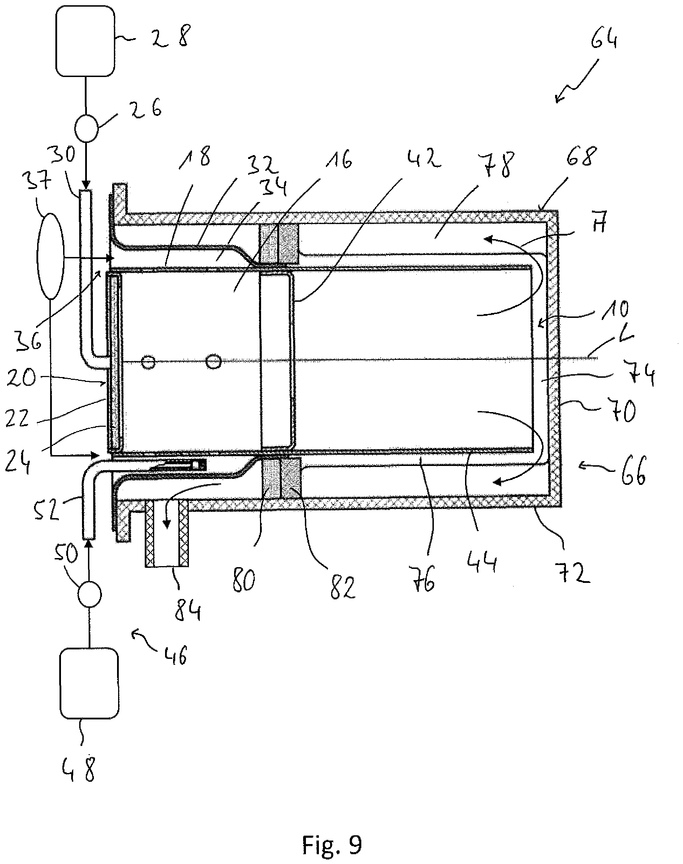

Die Fig. 9 zeigt ein brennstoffbetriebenes Fahrzeugheizgerät 64, bei welchem eine Brennkammerbaugruppe 10, wie sie beispielsweise in Fig. 1 dargestellt ist, zum Einsatz kommt. Es ist darauf hinzuweisen, dass selbstverständlich auch die in Fig. 5 dargestellte Brennkammerbaugruppe bei dem in Fig. 9 dargestellten Fahrzeugheizgerät 64 Anwendung finden könnte.

Das Fahrzeugheizgerät 64 umfasst eine allgemein mit 66 bezeichnete Wärmetauscheranordnung mit einem die Brennkammerbaugruppe 10 umgebenden Wärmetauschergehäuse 68. Das Wärmetauschergehäuse 68 weist eine dem axial offenen Ende des Flammrohrs 44 gegenüberliegende Bodenwand 70 sowie eine die Brennkammerbaugruppe 10 an ihrer radialen Außenseite umgebende Umfangswand 72 auf. Die Umfangswand 72 kann beispielsweise zusammen mit der das Brennkammergehäuse 14 umgebenden Außenumfangswand 32 der Brennkammerbaugruppe 10 an einem Träger festgelegt bzw. mit dem Verbrennungsluftgebläse 37 verbunden sein.

Zwischen der Außenseite der Brennkammerbaugruppe 10, insbesondere des Flammrohrs 44 und der Außenumfangswand 32 und dem Wärmetauschergehäuse 68 ist ein allgemein mit 74 bezeichnetes Abgasströmungsvolumen gebildet. Das das Flammrohr 44 an seinem der Bodenwand 70 axial gegenüberliegenden offenen Ende verlassende Abgas A wird an der Bodenwand 70 nach radial außen umgelenkt und gelangt in einen zwischen der Umfangswand 72 und dem Flammrohr 44 bzw. der Außenumfangswand 32 gebildeten Abgasströmungsraum 76, welcher einen Teil des gesamten Abgasströmungsvolumens 70 bereitstellt. Im Abgasströmungsraum 76 strömt das Abgas A im Wesentlichen in Richtung der Gehäuselängsachse L von der Bodenwand 70 weg und umströmt dabei an der Innenseite des Wärmetauschergehäuses 68 vorgesehene Wärmeübertragungsrippen 78. Dabei überträgt das Abgas A Wärme auf das Wärmetauschergehäuse 68, welches diese bzw. den größten Teil dieser Wärme auf das Wärmetauschergehäuse 68 an seiner Außenseite umströmendes, zu erwärmendes Medium übertragen kann.

Im Abgasströmungsraum 76 sind beispielsweise anschließend an die Wärmeübertragungsrippen 78 axial bzw. in Strömungsrichtung aufeinanderfolgend zunächst eine SCR-Katalysatoranordnung 82 und dann eine Oxidationskatalysatoranordnung 80 vorgesehen. Das Abgas A umströmt die beiden Katalysatoranordnungen 82, 80 bzw. durchströmt diese nacheinander und gelangt über einen dann folgenden Teil des Abgasströmungsraums 76 zu einem Abgasauslass 84.

Bei der in Fig. 9 dargestellten Ausgestaltung des Fahrzeugheizgeräts 64 ist die Kühlmediumzuführanordnung 46 dazu ausgebildet, ein Reduktionsmittel, also beispielsweise eine Harnstoff/Wasser-Lösung, aus dem Kühlmediumreservoir 48 über die Kühlmediumzuführleitung 52 in die Verbrennungsluftzuführkammer 34 bzw. allgemein das Verbrennungsluftzuführvolumen 36 einzuleiten. Aufgrund der hohen Temperatur im Bereich der Verbrennungsluftzuführkammer 34 verdampft die Harnstoff/Wasser-Lösung sehr schnell und wird von der Verbrennungsluft aufgenommen und in die Brennkammer 16 transportiert. Das Ausmaß der bereits in der Verbrennungsluftzuführkammer 34 verdampfenden Anteils des flüssigen Kühlmediums kann insbesondere durch Variieren der Eintauchtiefe der Kühlmediumzuführleitung 52 in die Verbrennungsluftzuführkammer 34 angepasst werden.

Wie bereits vorangehend beschrieben, wird durch die Verdampfung des flüssigen Kühlmediums bzw. den Transport des verdampften bzw. flüssigen Kühlmediums in der Verbrennungsluft die Verbrennungstemperatur der in der Brennkammer 16 ablaufenden Verbrennung gesenkt, begleitet durch einen bereits dadurch gesenkten Stickoxidanteil im Abgas. Aufgrund der sehr hohen Temperatur, welcher die in der Verbrennungsluft transportierte Harnstoff/Wasser-Lösung ausgesetzt ist, wird eine Thermolyse des Harnstoffs in Ammoniak und Isocyansäure auftreten. Durch Hydrolyse wird die Isocyansäure dann zu Ammoniak umgesetzt. Ein üblicherweise bei Fahrzeugen dafür erforderlicher Hydrolyse-Katalysator ist bei dem erfindungsgemäßen Aufbau eines Fahrzeugheizgeräts 64 daher nicht erforderlich.

Während in der Oxidationskatalysatoranordnung 80 der CO-Gehalt und der HC-Gehalt im Abgas bis an die Nachweisgrenze verringert werden können, wird durch die in der SCR-(Selektive katalytische Reduktion)-Katalysatoranordnung 82 ablaufende katalytische Reduktion Stickstoffmonoxid bzw. Stickstoffdioxid mit dem im Abgas transportierten Ammoniak zu Stickstoff und Wasser umgesetzt. Der das Fahrzeugheizgerät 64 verlassende Abgasstrom weist daher einen weiter gesenkten Anteil an Stickoxid auf.

Es ist abschließend darauf hinzuweisen, dass bei dem in Fig. 9 dargestellten Aufbau die SCR-Katalysatoranordnung 82 und die Oxidationskatalysatoranordnung 80 baulich zusammengefasst werden können, indem auf ein- und dasselbe Substrat die für die verschiedenen katalytischen Reaktionen vorzusehenden Oberflächenbeschichtungen aufgebracht werden, vorzugsweise in der in Fig. 9 dargestellten Abfolge in Strömungsrichtung, so das zunächst wieder die SCR-Katalysatoranordnung 82 und dann Oxidationskatalysatoranordnung 80 umströmt bzw. durchströmt wird.

## Patentansprüche

1. Brennkammerbaugruppe für ein brennstoffbetriebenes Fahrzeugheizgerät, umfassend ein in Richtung einer Gehäuselängsachse (L) langgestrecktes Brennkammergehäuse (14) mit einer eine Brennkammer (16) nach radial außen begrenzenden Brennkammerumfangswand (18) und einem die Brennkammer (16) axial begrenzenden Brennkammerboden (20) sowie ein über eine Mehrzahl von Durchtrittsöffnungen (38) zu der Brennkammer (16) offenes Verbrennungsluftzuführvolumen (36), wobei Brennkammerboden (20) ein poröses Verdampfermedium (24) und eine flüssigen Brennstoff zu dem porösen Verdampfermedium (24) leitende Brennstoffzuführleitung (30) umfasst, **dadurch gekennzeichnet, dass** die Brennkammerbaugruppe ferner eine Kühlmediumzuführanordnung (46) umfasst, welche zum Zuführen von flüssigem Kühlmedium zu dem Verbrennungsluftzuführvolumen (36) zum Einleiten des flüssigen Kühlmediums in die zur Brennkammer (16) geleitete Verbrennungsluft ausgebildet ist.

2. Brennkammerbaugruppe nach Anspruch 1, **dadurch gekennzeichnet, dass** eine die Brennkammerumfangswand (18) außen umgebende Außenumfangswand (32) vorgesehen ist, wobei zwischen der Brennkammerumfangswand (18) und der Außenumfangswand (32) eine Verbrennungsluftzuführkammer (34) des Verbrennungsluftzuführvolumens (36) gebildet ist und die Verbrennungsluftzuführkammer (34) über wenigstens einen Teil der Durchtrittsöffnungen (38) zu der Brennkammer (16) offen ist, und dass die Kühlmediumzuführanordnung (46) wenigstens eine Kühlmediumzuführleitung (52) zur Abgabe von flüssigem Kühlmedium in die Verbrennungsluftzuführkammer (34) umfasst.

3. Brennkammerbaugruppe nach Anspruch 2, **dadurch gekennzeichnet, dass** die Kühlmediumzuführleitung (52) in die Verbrennungsluftzuführkammer (34) einmündet.

4. Brennkammerbaugruppe nach Anspruch 2 oder 3, **dadurch gekennzeichnet, dass** die Kühlmediumzuführleitung (52) wenigstens eine zu der Verbrennungsluftzuführkammer (34) offene Kühlmediumabgabeöffnung (58, 62) aufweist.

5. Brennkammerbaugruppe nach Anspruch 3 oder 4, **dadurch gekennzeichnet, dass** an einem Ende eines in die Verbrennungsluftzuführkammer (34) sich erstreckenden Leitungsabschnitts (54) der Kühlmediumzuführleitung (52) eine Kühlmediumabgabedüse (56) mit wenigstens einer, vorzugsweise einer Mehrzahl von Kühlmediumabgabeöffnungen (58) vorgesehen ist.

6. Brennkammerbaugruppe nach Anspruch 5, **dadurch gekennzeichnet, dass** der Leitungsabschnitt (54) sich im Wesentlichen in Richtung der Gehäuselängsachse (L) erstreckt.

7. Brennkammerbaugruppe nach Anspruch 3 oder 4, **dadurch gekennzeichnet, dass** die Verbrennungsluftzuführkammer (34) die Brennkammer (16) wenigstens bereichsweise radial außen umgibt, und dass die Kühlmediumzuführleitung (52) einen in der Verbrennungsluftzuführkammer (34) sich in Umfangsrichtung wenigstens bereichsweise um die Brennkammerumfangswand (18) erstreckenden Leitungsabschnitt (60) aufweist, wobei in dem Leitungsabschnitt (60) wenigstens eine, vorzugsweise eine Mehrzahl von Kühlmediumabgabeöffnungen (62) vorgesehen ist.

8. Brennkammerbaugruppe nach Anspruch 7, **dadurch gekennzeichnet, dass** eine Mehrzahl von Kühlmediumabgabeöffnungen (62) vorgesehen ist, und dass die Kühlmediumabgabeöffnungen (62) entlang des Leitungsabschnitts (60) in Umfangsrichtung aufeinanderfolgend angeordnet sind.

9. Brennkammerbaugruppe nach Anspruch 7 oder 8 **dadurch gekennzeichnet, dass** wenigstens eine, vorzugsweise jede, Kühlmediumabgabeöffnung (62) an einer dem Brennkammerboden (20) axial zugewandten Seite des Leitungsabschnitts (60) vorgesehen ist, oder/und dass wenigstens eine, vorzugsweise jede, Kühlmediumabgabeöffnung an einer vom dem Brennkammerboden (20) axial abgewandten Seite des Leitungsabschnitts (60) vorgesehen ist.

10. Brennkammerbaugruppe nach einem der vorangehenden Ansprüche, **dadurch gekennzeichnet, dass** die Kühlmediumzuführanordnung (46) eine Kühlmediumpumpe (50) zum Fördern des flüssigen Kühlmediums aus einem Kühlmediumreservoir (48) zu dem Verbrennungsluftzuführvolumen (36) umfasst.

11. Fahrzeugheizgerät, umfassend eine Brennkammerbaugruppe (12) nach einem der vorangehenden Ansprüche.

12. Fahrzeugheizgerät nach Anspruch 11, **dadurch gekennzeichnet, dass** in einem Abgasströmungsvolumen (74) eine von Abgas umströmbare Reduktionskatalysatoranordnung (82), vorzugsweise SCR-Katalysatoranordnung (82), vorgesehen ist, und dass die Kühlmediumzuführanordnung (46) zum Zuführen eines Reduktionsmittels als flüssiges Kühlmedium ausgebildet ist.

13. Fahrzeugheizgerät nach Anspruch 12, **dadurch gekennzeichnet, dass** zwischen der Brennkammerbaugruppe (10) und einem Wärmetauschergehäuse (68) ein wenigstens einen Teil des Abgasströmungsvolumens (74) bereitstellender Abgasströmungsraum (76) gebildet ist, und dass die Reduktionskatalysatoranordnung (82) in dem Abgasströmungsraum (76) angeordnet ist.

14. Fahrzeugheizgerät nach Anspruch 12 oder 13, **dadurch gekennzeichnet, dass** in dem Abgasströmungsvolumen (74) eine Oxidationskatalysatoranordnung (80) vorgesehen ist.

15. Fahrzeugheizgerät nach Anspruch 14, **dadurch gekennzeichnet, dass** die Reduktionskatalysatoranordnung (82) in die Oxidationskatalysatoranordnung (80) integriert ist.

## Claims

1. Combustion chamber assembly unit for a fuel-operated vehicle heater, comprising a combustion chamber housing (14) elongated in the direction of a housing longitudinal axis (L) with a combustion chamber circumferential wall (18) defining a combustion chamber (16) radially outwards and with a combustion chamber bottom (20) axially defining the combustion chamber (16) as well as a combustion air feed volume (36) open to the combustion chamber (16) via a plurality of passage openings (38), wherein
the combustion chamber bottom (20) comprises a porous evaporator medium (24) and a fuel feed line (30) guiding liquid fuel to the porous evaporator medium (24), **characterized in that** the combustion chamber assembly further comprises a cooling medium feed device (46) adapted for feeding liquid cooling medium to the combustion air feed volume (36) for introducing the liquid cooling medium into the combustion air guided to the combustion chamber (16).

2. Combustion chamber assembly unit in accordance with claim 1, **characterized in that** an outer circumferential wall (32) surrounding the combustion chamber circumferential wall (18) on the outside is provided, wherein a combustion air feed chamber (34) of the combustion air feed volume (36) is formed between the combustion chamber circumferential wall (18) and the outer circumferential wall (32), and the combustion air feed chamber (34) is open to the combustion chamber (16) over at least some of the passage openings (38), and that the cooling medium feed device (46) comprises at least one cooling medium feed line (52) for releasing liquid cooling medium into the combustion air feed chamber (34).

3. Combustion chamber assembly unit in accordance with claim 2, **characterized in that** the cooling medium feed line (52) opens into the combustion air feed chamber (34).

4. Combustion chamber assembly unit in accordance with claim 2 or 3, **characterized in that** the cooling medium feed line (52) presents at least one cooling medium release opening (58, 62), which is open to the combustion air feed chamber (34).

5. Combustion chamber assembly unit in accordance with claim 3 or 4, **characterized in that** a cooling medium release nozzle (56) with at least one cooling medium release opening (58) and preferably with a plurality of cooling medium release openings (58) is provided at one end of a line section (54) of the cooling medium feed line (52), which extends into the combustion air feed chamber (34).

6. Combustion chamber assembly unit in accordance with claim 5, **characterized in that** the line section (54) extends essentially in the direction of the housing longitudinal axis (L).

7. Combustion chamber assembly unit in accordance with claim 3 or 4, **characterized in that** the combustion air feed chamber (34) surrounds the combustion chamber (16) radially on the outside in at least some areas, and that the cooling medium feed line (52) has a line section (60) extending in the combustion air feed chamber (34) around the combustion chamber circumferential wall (18) in the circumferential direction in at least some areas, wherein at least one cooling medium release opening (62) and preferably a plurality of cooling medium release openings (62) is provided in the line section (60).

8. Combustion chamber assembly unit in accordance with claim 7, **characterized in that** a plurality of cooling medium release openings (62) are provided, and that the cooling medium release openings (62) are arranged along the line section (60) following one another in the circumferential direction.

9. Combustion chamber assembly unit in accordance with claim 7 or 8, **characterized in that** at least one cooling medium release opening (62) and preferably each cooling medium release opening (62) is provided on a side of the line section (60) that axially faces the combustion chamber bottom (20), or/and that at least one cooling medium release opening and preferably each cooling medium release opening is provided on a side of the line section (60) that faces axially away from the combustion chamber bottom (20).

10. Combustion chamber assembly unit in accordance with one of the above claims, **characterized in that** the cooling medium feed device (46) comprises a cooling medium pump (50) for delivering the liquid cooling medium from a cooling medium reservoir (48) to the combustion air feed volume (36).

11. Vehicle heater, comprising a combustion chamber assembly unit (12) in accordance with one of the above claims.

12. Vehicle heater in accordance with claim 11, **characterized in that** a reduction catalytic converter device (82), preferably an SCR catalytic converter device (82), around which waste gas can flow, is provided in a waste gas flow volume (74), and that the cooling medium feed device (46) is configured to feed a reducing agent as a liquid cooling medium.

13. Vehicle heater in accordance with claim 12, **characterized in that** a waste gas flow space (76) providing at least a part of the gas flow volume (74) is formed between the combustion chamber assembly unit (10) and a heat exchanger housing (68), and that the reduction catalytic converter device (82) is arranged in the waste gas flow space (76).

14. Vehicle heater in accordance with claim 12 or 13, **characterized in that** an oxidation catalytic converter device (80) is provided in the waste gas flow volume (74).

15. Vehicle heater in accordance with claim 14, **characterized in that** the reduction catalytic converter device (82) is integrated into the oxidation catalytic converter device (80).

## Revendications

1. Module de chambre de combustion pour un dispositif de chauffage de véhicule à combustible, comprenant un boîtier de chambre de combustion (14) allongé dans la direction de l'axe longitudinal du boîtier (L) avec une paroi circonférentielle de chambre de combustion (18) définissant une chambre de combustion (16) radialement vers l'extérieur et avec un fond de chambre de combustion (20) définissant axialement la chambre de combustion (16) ainsi qu'un volume d'alimentation en air de combustion (36) ouvert à la chambre de combustion (16) via une pluralité d'ouvertures de passage (38), dans lequel
le fond de chambre de combustion (20) comprend un milieu d'évaporation poreux (24) et une conduite d'alimentation en carburant (30) guidant le carburant liquide vers le milieu d'évaporation poreux (24),
**caractérisé en ce que** le module de chambre de combustion comprend en outre un dispositif d'alimentation en médium de refroidissement (46) adapté pour alimenter le volume d'alimentation en air de combustion (36) en médium de refroidissement liquide pour introduire le médium de refroidissement liquide dans l'air de combustion guidé à la chambre de combustion (16).

2. Module de chambre de combustion selon la revendication 1, **caractérisée en ce qu'**une paroi circonférentielle extérieure (32) entourant la paroi circonférentielle de la chambre de combustion (18) à l'extérieur est prévue, dans lequel une chambre d'alimentation en air de combustion (34) du volume d'alimentation en air de combustion (36) est formée entre la paroi circonférentielle de la chambre de combustion (18) et la paroi circonférentielle extérieure (32), et que la chambre d'alimentation en air de combustion (34) est ouverte à la chambre de combustion (16) sur au moins une partie des ouvertures de passage (38), et que le dispositif d'alimentation en médium de refroidissement (46) comprend au moins une conduite d'alimentation en médium de refroidissement (52) pour libérer du médium de refroidissement liquide dans la chambre d'alimentation en air de combustion (34).

3. Module de chambre de combustion selon la revendication 2, **caractérisée en ce que** la conduite d'alimentation en médium de refroidissement (52) débouche dans la chambre d'alimentation en air de combustion (34).

4. Module de chambre de combustion selon la revendication 2 ou 3, **caractérisée en ce que** la conduite d'alimentation en médium de refroidissement (52) présente au moins une ouverture de libération du médium de refroidissement (58, 62), qui est ouverte à la chambre d'alimentation en air de combustion (34).

5. Module de chambre de combustion selon la revendication 3 ou 4, **caractérisée en ce qu'**une buse de libération du médium de refroidissement (56) avec au moins une ouverture de libération du médium de refroidissement (58) et de préférence avec une pluralité d'ouvertures de libération du médium de refroidissement (58) est prévue à une extrémité d'une section de conduite (54) de la conduite d'alimentation en médium de refroidissement (52), s'étendant dans la chambre d'alimentation en air de combustion (34).

6. Module de chambre de combustion selon la revendication 5, **caractérisée en ce que** la section de conduite (54) s'étend essentiellement dans la direction de l'axe longitudinal du boîtier (L).

7. Module de chambre de combustion selon la revendication 3 ou 4, **caractérisée en ce que** la chambre d'alimentation en air de combustion (34) entoure la chambre de combustion (16) radialement à l'extérieur dans au moins certaines zones, et **en ce que** la conduite d'alimentation en médium de refroidissement (52) comprend une section de conduite (60) s'étendant dans la chambre d'alimentation en air de combustion (34) autour de la paroi circonférentielle de la chambre de combustion (18) dans la direction circonférentielle dans au moins certaines zones, dans lequel au moins une ouverture de libération du médium de refroidissement (62) et de préférence une pluralité d'ouvertures de libération du médium de refroidissement (62) est prévue(s) dans la section de conduite (60).

8. Module de chambre de combustion selon la revendication 7, **caractérisée en ce qu'**une pluralité d'ouvertures de libération du médium de refroidissement (62) sont prévues, et que les ouvertures de libération du médium de refroidissement (62) sont disposées le long de la section de conduite (60) en se suivant dans la direction circonférentielle.

9. Module de chambre de combustion selon la revendication 7 ou 8, **caractérisée en ce qu'**au moins une ouverture de libération du médium de refroidissement (62) et de préférence chaque ouverture de libération du médium de refroidissement (62) est prévue sur un côté de la section de conduite (60) qui fait face axialement au fond de chambre de combustion (20), ou/et **en ce qu'**au moins une ouverture de libération du médium de refroidissement et de préférence chaque ouverture de libération du médium de refroidissement est prévue sur un côté de la section de conduite (60) qui fait face axialement à l'opposé du fond de chambre de combustion (20).

10. Module de chambre de combustion selon l'une des revendications précédentes, **caractérisée en ce que** le dispositif d'alimentation en médium de refroidissement (46) comprend une pompe à médium de refroidissement (50) pour acheminer le médium de refroidissement liquide d'un réservoir de médium de refroidissement (48) vers le volume d'alimentation en air de combustion (36).

11. Chauffage de véhicule, comprenant un module de chambre de combustion (12) selon l'une des revendications précédentes.

12. Chauffage de véhicule selon la revendication 11, **caractérisé en ce qu'**un dispositif de convertisseur catalytique de réduction (82), de préférence un dispositif de convertisseur catalytique SCR (82), autour duquel les gaz d'échappement peuvent s'écouler, est prévu dans un volume d'écoulement des gaz d'échappement (74), et **en ce que** le dispositif d'alimentation en médium de refroidissement (46) est configuré pour alimenter un agent de réduction en tant que médium de refroidissement liquide.

13. Chauffage de véhicule selon la revendication 12, **caractérisé en ce qu'**un espace d'écoulement des gaz d'échappement (76) fournissant au moins une partie du volume d'écoulement des gaz (74) est formé entre le module de chambre de combustion (10) et un boîtier d'échangeur de chaleur (68), et que le dispositif de convertisseur catalytique de réduction (82) est disposé dans l'espace d'écoulement des gaz d'échappement (76).

14. Chauffage de véhicule selon la revendication 12 ou 13, **caractérisé en ce qu'**un dispositif de convertisseur catalytique d'oxydation (80) est prévu dans le volume d'écoulement des gaz d'échappement (74).

15. Chauffage de véhicule selon la revendication 14, **caractérisé en ce que** le dispositif de catalyseur de réduction (82) est intégré dans le dispositif de catalyseur d'oxydation (80).
